# EUROPEAN PATENT APPLICATION

(11) **EP 1 854 773 A1**
(43) Date of publication of application: **14.11.2007**
(21) Application number: 06715104.3
(22) Date of filing: 02.03.2006
(51) Int. Cl.: C04B 37/00, B01D 39/20, B01D 46/00, F01N 3/02

(54) **SINTERED BODY WITH SPACERS, AND PRODUCTION METHOD AND JOINING METHOD FOR THE SAME**

(30) Priority: 03.03.2005 JP 2005058939
(71) Applicant: Asahi Glass Co., Ltd., Tokyo 100-8405 (JP)
(72) Inventor: MIYAKAWA, Naomichi, Fukuoka 8040084 (JP); TAKAHASHI, Hideo, , Tsurumi-ku, Yokohama-shi, Kanagawa 230 (JP)
(74) Representative: Müller-Boré & Partner Patentanwälte
(86) International application number: PCT/JP2006/303995
(87) International publication number: WO 2006/093231

(57) **Abstract**

The present invention provides a sintered body with spacers, its production process and bonding method and a ceramic honeycomb filter, which enable to bond adjacent sintered bodies as they are aligned in the same direction at a time of forming a filter by bonding the sintered bodies and to carry out the bonding step automatically by a machine even if the sintered bodies have sintering deformation by e.g. sintering shrinkage.

The sintered body with spacers comprises a sintered main body of column shape having both ends opening in a honeycomb shape and having a rectangular cross-section and spacers provided on side faces of the sintered main body, wherein the spacers are provided on at least two opposing side faces among four side faces of the sintered main body, and top faces of the spacers of the opposing side faces are parallel with each other. The sintered body with spacers is bonded with adjacent sintered body with spacers as the spacers are contact with each other.

## Description

### TECHNICAL FIELD

The present invention relates to a sintered body with spacers comprising a sintered body obtained by sintering a molded body and spacers formed on the sintered body, to its production method and bonding method, and to a ceramic honeycomb filter.

### BACKGROUND ART

DPFs (diesel particulate filters) are employed for cleaning exhaust gases of engines of e.g. vehicles. For such a DPF, a ceramic filter (hereinafter it is abbreviated as a filter) made of a non-oxide material such as a silicon carbide material or a silicon nitride material, is employed. As the filter is used, e.g. soot in the exhaust gas is accumulated in the filter. Accordingly, it is necessary to increase the exhaust gas temperature (for example, 500°C to 1,000°C) to burn this e.g. soot to improve filtering efficiency. However, when a large-sized filter is formed by a single sintered body, a thermal stress increases and repeat of such a high-temperature treatment may cause a heat shock, which may cause e.g. a crack. To cope with this problem, a filter is proposed which is constituted by a plurality of sintered bodies bonded together to reduce heat expansion or heat shrinkage by such a heat shock.

Patent Document 1 describes a ceramic structure. The ceramic structure is constituted by a plurality of porous ceramic members bound together via an adhesive layer, and distance-keeping members are interposed between the porous ceramic members bound. However, since each of such porous ceramic members has sintering deformation due to e.g. shrinkage at the time of sintering, the porous ceramic member is not an ideal rectangular solid but its side faces are warped. Accordingly, even when only such distance-keeping members of cylindrical shape or a rectangular column shape are provided on such warped side faces to maintain the distance, adjacent porous ceramic members are not straightly arranged but they are inclined, and thus, they are not bonded as they are aligned straightly in the same direction. Accordingly, when a large number of porous ceramic members are bonded, dimension accuracy of entire ceramic structure is deteriorated, and thus, it is difficult to form a large DPF (e.g. a cylindrical shape of 45 cm in diameter) to be used for e.g. trucks or buses. Further, since the shapes of such porous ceramic members are different from one another due to sintering deformation, it is difficult to automatically carry out a step of attaching distance-keeping members and attaching of the distance-keeping members is troublesome, which is problematic in terms of productivity.
Patent Document 1: JP-A-2002-102627

### DISCLOSURE OF THE INVENTION

### PROBLEMS TO BE SOLVED BY THE INVENTION

It is an object of the present invention to provide sintered bodies with spacers, whereby at a time of bonding sintered bodies to form a filter, even if the sintered bodies have sintering deformations by e.g. shrinkage at a time of sintering, adjacent sintered bodies can be bonded as they are aligned in the same direction, and whereby the bonding work can be automatically carried out by a machine; and it is an object of the present invention to provide a production process and bonding method of such a sintered product with spacers, and to provide a ceramic honeycomb filter.

### MEANS OF SOLVING THE PROBLEMS

The present invention provides, in order to achieve the above object, a sintered body with spacers comprising a sintered main body of column shape having both ends opening in a honeycomb shape and having a rectangular cross-section, and spacers provided on side faces of the sintered main body, wherein the spacers are provided on at least opposing two side faces among four side faces of the sintered main body, and wherein planes defined by top faces of the spacers on the respective side faces are parallel with each other.

In a preferred embodiment of the present invention, the present invention is characterized in that the spacers are provided on the four side faces, and an imaginary cross-section defined by top faces of the spacers is a rectangle or a square.

Further, the present invention provides a process for producing a sintered body with spacers, comprising a step of applying pasty spacers at predetermined positions of four side faces of a sintered main body of column shape having both ends opening in a honeycomb shape and having a rectangular cross-section, a step of setting the sintered main body in a molding frame having a rectangular hollow cross-section enclosed by four planes, and a step of drying and solidifying the spacers.

Further, the present invention provides the method for bonding the sintered bodies with spacers, wherein the spacers are provided on predetermined positions of four side faces of the sintered main body of each of the sintered bodies, and the method comprises a step of bonding adjacent sintered bodies in a state that their spacers are contact with each other.

In the above bonding method, it is preferred that adjacent sintered bodies are bonded so that their center positions in their longitudinal directions are aligned.

Further, the present invention provides a ceramic honeycomb filter which is formed by machining a bonded body comprising a plurality of sintered bodies bonded by the bonding method of sintered bodies with spacers.

### EFFECTS OF THE INVENTION

In the sintered body with spacers of the present invention, since planes defined by top faces of spacers provided on opposing side faces of a column body having a rectangular cross-section, are parallel with each other, the sintered bodies can be piled up without being inclined when they are piled up as they are in laying positions. By this construction, even if a large number of sintered bodies are piled up, it is possible to bond the sintered bodies as they are aligned in the same direction, and the dimension accuracy is not deteriorated.

Further, when the spacers are formed on all of four side faces of each sintered main bodies, a cross-section of an imaginary rectangular column defined by top faces of the spacers, becomes rectangle or square, and thus, the sintered bodies can be three-dimensionally piled up with good dimension accuracy, and a large sized filter excellent in dimension accuracy can be easily produced.

According to the bonding method of sintered bodies with spacers of the present invention, each of the sintered main bodies having four side faces applied with pasty spacers is set in a molding frame having a rectangular hollow cross-section, and the pasty spacers are dried to be solidified in this state, whereby top faces of the spacers formed on the four side faces of the sintered main body define a part of side faces of an imaginary rectangular column having a rectangular cross-section. By this method, it is possible to easily form a sintered body in which an imaginary rectangular column defined by top faces of the spacers has an accurate rectangular (square or rectangular) cross-section.

Further, in the present invention, sintered bodies having side faces provided with spacers are bonded so that spacers of adjacent sintered bodies are contact with each other, and thus, when a large number of sintered bodies are arranged vertically or horizontally, they can be bonded as they are aligned in one direction without being distorted or inclined in vertical or lateral direction.

In this case, by bonding the sintered bodies as their center positions in their longitudinal directions are aligned, a step of aligning end faces at the time of bonding or a step of aligning end faces of a bonded body after the bonding becomes unnecessary.

Further, in the present invention, a bonded body in which sintered bodies each having an accurate external shape of imaginary rectangular solid or square column defined by spacers, are bonded as they are aligned in one direction, is machined, and thus, a large-sized filter to be used for e.g. buses or trucks formed by bonding a plurality of sintered bodies as they are aligned in vertical and lateral directions, can be formed with good accuracy. Further, since such a filter is formed by bonding a plurality of sintered bodies, it is possible to reduce a heat shock at a time of using the filter, to reduce occurrence of e.g. cracks.

### BRIEF EXPLANATION OF THE DRAWINGS

Fig. 1: Views showing an example of sintered body with spacers according to the present invention, wherein Fig. 1(A) is a perspective view and Fig. 1(B) is a front view.
Fig. 2: A flow chart showing the process for producing a sintered body with spacers according to the present invention.
Fig. 3: A schematic view of a screening jig.
Fig. 4: A schematic view of a molding frame for forming top faces of spacers.
Fig. 5: A schematic view showing a state that a sintered body with spacers according to the present invention is contained in the molding frame of Fig. 4.
Fig. 6: Schematic views sequentially showing the bonding method of the sintered bodies with spacers according to the present invention.
Fig. 7: A top view of a bonded body formed by the bonding method of the sintered bodies with spacers according to the present invention.
Fig. 8: A schematic view of a ceramic honeycomb filter according to the present invention.
Fig. 9: A flow chart showing the process for producing a ceramic honeycomb filter.

### EXPLANATION OF NUMERALS

1: Sintered body with spacers, 2: sintered main body, 3: spacer, 4: through hole, 5: sealing member, 6: screening jig, 6a: gutter, 6b: cap, 7: molding frame, 7a, 7b: wall member, 7c: hinge, 8: molding-separation paper, 9: bonding table, 10: bonding agent, 11: bonded body, 12: ceramic honeycomb filter, 13: cross-section of external shape defined by top faces of spacers (imaginary cross-section), 14: supporting member for sintered body

### BEST MODE FOR CARRYING OUT THE INVENTION

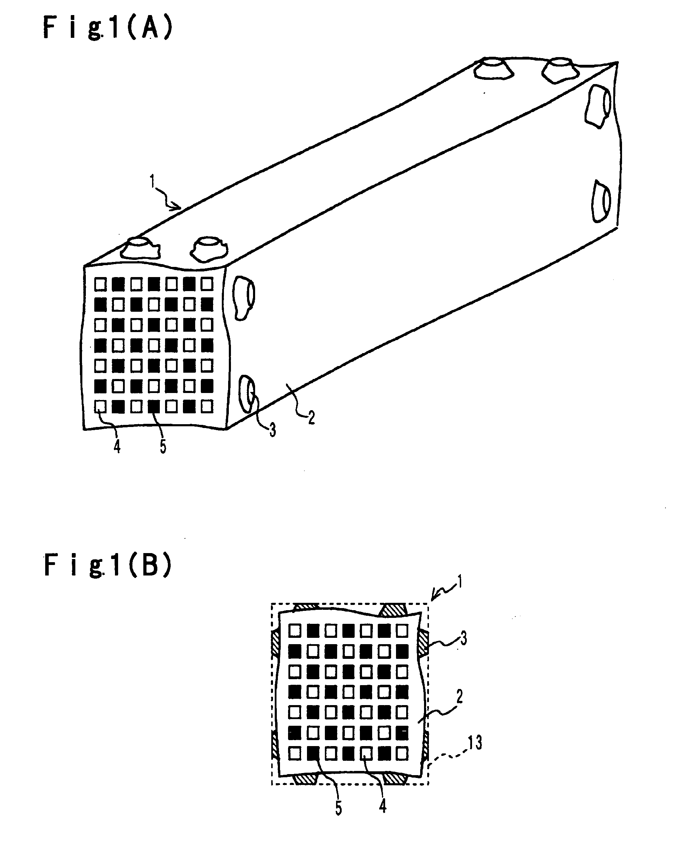

A sintered body with spacers of the present invention is described with reference to drawings. Fig. 1 shows a sintered body with spacers according to the present invention, wherein Fig. 1(A) is a perspective view and Fig. 1(B) is a front view. As shown in Fig. 1, the sintered body 1 with spacers according to the present invention is constituted by a sintered main body 2 and spacers 3. The sintered main body 2 has a column shape having a substantially rectangular (square or rectangular) cross-section, which has a plurality of through holes 4 perforating through both ends so that the cross-section (end faces) has a grating shape. Accordingly, both ends of the sintered main body 2 are each opened in a honeycomb shape of grating by the plurality of through holes 4. When the sintered body 1 is used as a filter, the through holes 4 are filled with sealing members 5 so that both end faces (inlet side and outlet side) of the sintered main body 2 becomes a hound's tooth pattern or a checkerboard pattern as shown in Fig. 1. Here, the sealing members 5 fill different through holes 4 between the ends of inlet side and outlet side. Namely, a through hole 4 whose inlet side is sealed has an opening outlet side and a through hole 4 whose inlet side is open has a sealed outlet side. Partitions between adjacent through holes 4 are made of porous sintered body. By this construction, an exhaust gas flows into through holes 4 opening in the inlet side and as it flows through the through holes 4, moves into adjacent through holes 4 through a filter made of a porous sintered body as partitions between the through holes 4, whereby e.g. a soot is removed by the filter and the gas is exhausted through the through holes 4 opening to the outlet side as a cleaned air. Here, filling of the sealing members 5 may be carried out before or after the forming of spacers, and is not particularly limited.

A plurality of spacers 3 are provided at predetermined positions of each of four side faces of the square column-shaped sintered main body 2 (4 spacers in each side face in the Figure). In this case, the spacers 3 are provided at positions of side faces of adjacent sintered main bodies 2 substantially corresponding to each other so that the spacers of the adjacent sintered main bodies 2 are contact with each other. Further, the positions in the side faces of the sintered main bodies 2 at which the spacers 3 are provided, are not particularly limited, but it is preferred to provide a plurality of spacers as they are distributed as uniformly as possible on the side faces. Specifically, when four spacers are provided on each side face, they are preferably provided in the corners of the side face.

The spacers 3 each has a projecting shape having a flat top face (leading edge face), they have different heights according to irregular shapes of side faces of the sintered main body 2, and the top faces of the four spacers 3 in each side face share a common plane. As a result, planes defined by top faces of spacers on opposing two side faces of the sintered main body 2, are parallel with each other. Accordingly, four planes defined by spacers 3 of four side faces, constitutes a virtual rectangular column having a rectangular cross-section. Namely, top faces of a plurality of spacers 3 provided on a side face of a sintered body 2 defines a common plane, and planes defined by top faces of spacers 3 of adjacent side faces, are perpendicular to each other. Accordingly, the outer shape defined by top faces of spacers 3 of four side faces, becomes a square column having a rectangular (square in the Figure) cross-section (virtual cross-section) as represented by the dotted line 13 of Fig. 1(B).

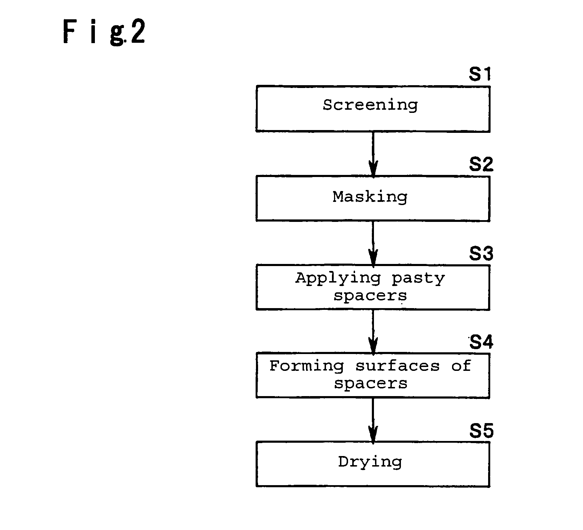

Then, a process for producing a sintered body with spacers according to the present invention, is described. Fig. 2 is a flow chart showing the process of producing a sintered body with spacers according to the present invention. Each step is described with reference to Fig. 2.

### Step S1

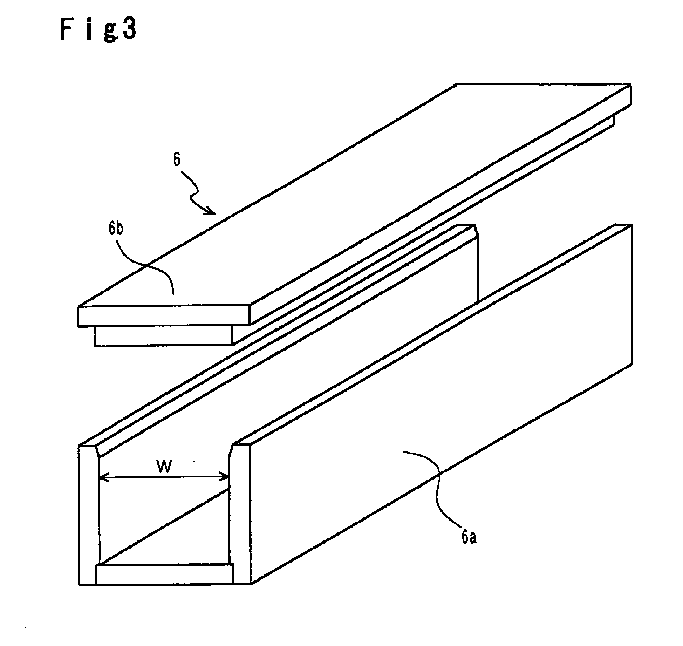

Sintered main bodies of square column shape molded are screened according to the size of square cross-section into groups having predetermined sizes. The screening can be carried out, for example, by using a screening jig of gutter shape as shown in Fig. 3. As shown in Fig. 3, the screening jig 6 is constituted by a gutter 6a having a predetermined width W. A plurality of gutters 6a having different Ws are prepared in advance. When sintered main bodies before forming spacers, are screened, for example, when square column-shaped sintered main bodies are screened, the sintered main bodies 2 are put into the gutter 6a to be screened according to their cross-sectional vertical and lateral dimensions into a group accommodable in the gutter and a group not accommodable in the gutter. The sintered main bodies not accommodable in the gutter can be further screened in the same manner using a different gutter 6a to be grouped according to the degree of deformation of the outer shape. Here, by attaching a cap 6b to the gutter 6a containing a sintered main body, it is possible to screen the sintered main bodies by the vertical dimensions at the same time.

Thus, by screening sintered main bodies using a plurality of types of gutters before forming spacers, the size of sintered bodies to be bonded can be unified to a certain extent before the bonding of sintered bodies to be described later, and it is possible to improve dimension accuracy of bonded body. Further, by appropriately selecting sintered bodies whose dimensions are screened before bonding, it is possible to attempt improvement of yield.

### Step S2

Both ends of a sintered main body are applied with masking. For example, its both ends are covered with e.g. a sheet in order to prevent bonding agent from being forced out to choke through holes at a time of bonding the sintered bodies to be described later.

### Step S3

Pasty spacers are applied on four side faces of each sintered main body. The spacers are made of a kneaded material not dried, and applied to predetermined positions of each side face. In this case, the pasty spacers are provided at four separate positions in each side face in Fig. 1, but the positions are not limited thereto. The number of spacers provided on each side face can be changed, and the numbers of spacers applied to the respective side faces of a sintered main body may be different. Further, the size and the shape of the spacers are not particularly limited, and instead of applying the spacers in dot shape as in this example, a single continuous spacer may be applied. Here, as the pasty spacer, one formed by appropriately adding an inorganic binder, an organic binder, inorganic particles or inorganic fibers into a solvent such as an alcohol or water, and mixing and kneading them, may be preferably employed.

### Step S4

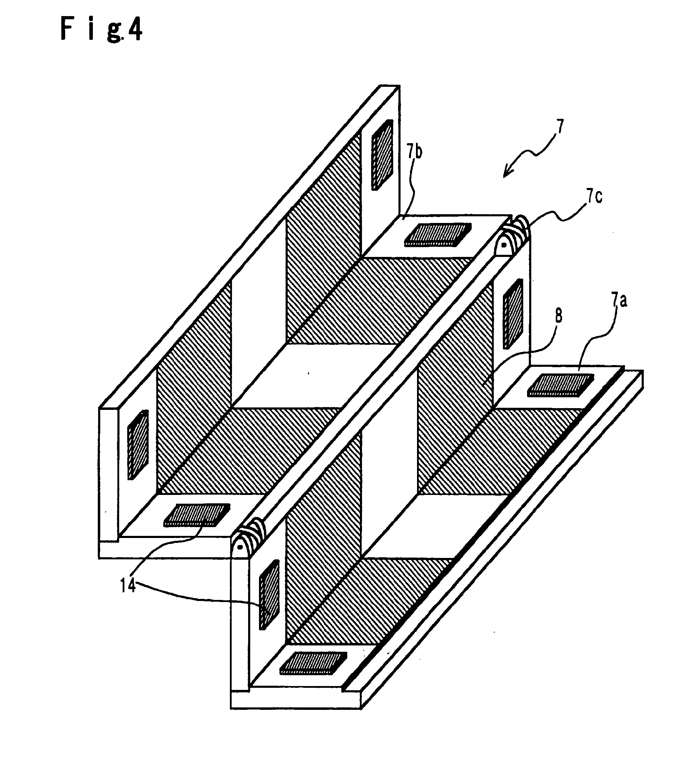

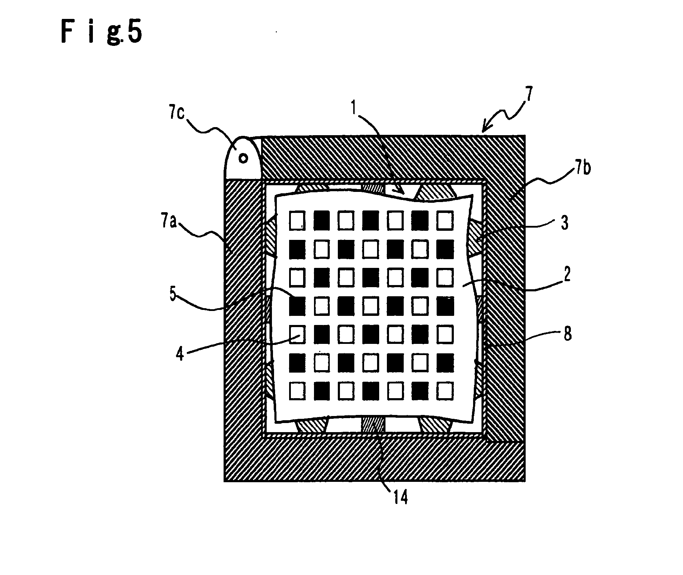

Top face alignment (hereinafter referred to as top face forming) of spacers are carried out by using a molding frame. The top face forming is carried out, for example, by setting a sintered main body in a molding frame for top face forming of spacers. This step is specifically described with reference to Fig. 4 and Fig. 5.

Fig. 4 is a schematic view of a molding frame for top face forming of spacers, and Fig. 5 is a cross-sectional schematic view showing a state in which a sintered body with spacers according to the present invention is set in the molding frame. As shown in the Figures, the molding frame 7 for top face forming is constituted by wall members 7a and 7b each having an L-shaped cross-section connected by a hinge 7c. Mold-separation papers 8 are attached to inner faces of the wall members 7a and 7b. By the mold-separation papers 8, spacers 3 of a sintered body 1 with spacers becomes easily separated from the molding frame, which can prevent e.g. deformation or damage at the time of separation, such being preferred. However, such mold-separation papers are not essential, and instead, the wall members 7a and 7b may have inner faces made of materials excellent in mold-separation characteristic such as a fluororesin. Sintered-body-supporting members 14 are preferably provided on inner faces of the wall members 7a and 7b, for fixing a sintered main body 2 substantially at the center of the molding frame. The sintered-body-supporting members 14 may be ones having elasticity such as springs or spongies.

Top face forming of spacers 3 is carried out in the following manner. First of all, a sintered main body 2 applied with spacers 3 is placed along inner faces of the wall member 7a. Then, another wall member 7 b is swung around a hinge 7c to make the molding frame 7 into square column shape and fixed by a catch (not shown). At this time, the pasty spacers 3 applied on side faces of the sintered main body 2 are pressed by the wall members 7a and 7b, and the sintered main body 2 is fixed in a state that top faces of the spacers are along inner faces of rectangular shape (square shape in the Figure) of the molding frame 7. Top faces of the spacers 3 formed on each of four side faces of the sintered main body 2, are formed to share a common plane by the wall member 7a or 7b, so that an outer shape defined by top faces is corrected to be a rectangular shape.

### Step S5

In a state that the sintered main body is set in the molding frame in step S4, the pasty spacers 3 are dried to be solidified. Accordingly, the spacers are solidified as they are molded so that the top faces fit to side faces of the square column having an accurate rectangular cross-section, and thus, an outer shape defined by spacer top faces of the sintered body with spacers, becomes an accurate rectangular solid or square column. Thus, a sintered body 1 with spacers according to the present invention is completed. Thereafter, the wall member 7b is opened to take out the sintered body 1 with spacers from the molding frame 7 for top face forming. At this time, the sintered body 1 with spacers can be easily taken out by the mold-separation paper 8. Thus, by providing spacers on side faces of a sintered main body, even if the sintered main body is deformed by e.g. sintering shrinkage, it is always possible to obtain a sintered body with spacers having an outer shape of rectangular solid or square column.

Then, a method for bonding the sintered bodies with spacers according to the present invention is described.

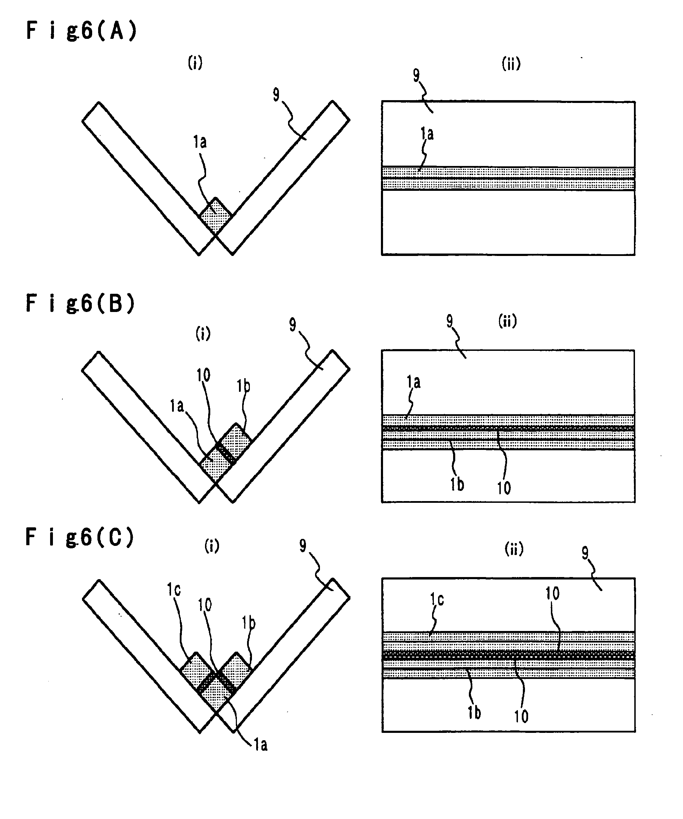

Figs 6(A) to 6(C) are schematic views sequentially showing the bonding method of the sintered bodies with spacers according to the present invention, wherein (i) and (ii) of Figs. 6(A) to 6(C) are side views and top views respectively.

As shown in Fig. 6(A), a sintered body 1a with spacers is placed on a bonding table 9 formed to have a V-shaped cross-section (crossing angle is 90°). The length of the bonding table 9 is formed to have the same length as that of the sintered body with spacers. At this time, the sintered body 1a with spacers is preferably positioned so that its central position in the longitudinal direction is aligned (centered) to the central position of the bonding table 9 in its longitudinal direction. Subsequently, as shown in Fig. 6(B), another sintered body 1b with spacers is placed on the bonding table 9 so as to be adjacent to the sintered body 1a with spacers placed earlier, and the sintered body 1b with spacers is bonded to the sintered body 1a with spacers via a bonding agent 10. At this time, by aligning the sintered body 1b with spacers and the bonding table 9 so that their centers in the longitudinal directions are aligned, the end of the sintered body 1b is aligned to the end of the sintered body 1a with spacers placed earlier, and thus, alignment of ends after bonding becomes unnecessary, such being preferred. Here, as the bonding agent 10, one produced by adding an inorganic binder, an organic binder, inorganic particles or inorganic fibers into a solvent such as an alcohol or water and mixing and kneading them, is preferably employed.

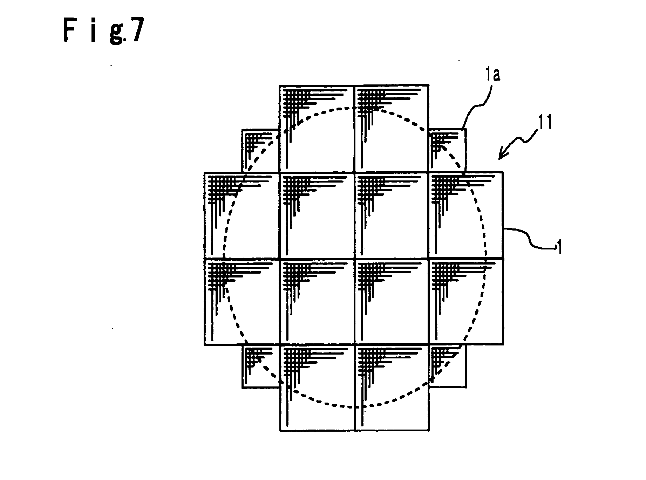

Further, as shown in Fig. 6(C), a sintered body 1c with spacers is bonded to another side face of the sintered body 1a with spacers. At this time, they are bonded so that their central positions in the longitudinal directions are aligned. By repeating this, a bonded body (refer to Fig. 7) of sintered bodies with spacers is formed. In this case, since side faces of each sintered body are provided with spacers accurately formed so that planes defined by top faces of the spacers form a virtual square column. Accordingly, when the sintered bodies are piled up as they are aligned to one another, they are piled up in a state that the top faces of the spacers of adjacently bonded sintered bodies are contact with each other. Accordingly, even if the sintered main bodies themselves are deformed, the sintered bodies with spacers can be piled up and bonded as they are arranged in parallel in the same manner as in piling up square columns. Here, usually, sintered bodies having all four side faces provided with spacers, are employed. However, with respect to sintered bodies present in the outermost positions among sintered bodies piled up on the bonding table, since no more sintered bodies are piled up on such sintered bodies as the spacers are in contact with each other, side faces to which no sintered body is adjacent are not necessarily provided with spacers.

Fig. 7 shows an end face of a bonded body formed by the bonding method of sintered bodies with spacers according to the present invention. As shown in Fig. 7, a bonded body 11 is formed by bonding a sufficient number of sintered bodies 1 and 1a to constitute the shape (dotted line) of a honeycomb filter being a final product. In Fig. 7, 12 pieces of standard sintered bodies 1 and 4 pieces of corner small sintered bodies 1a are bonded as a combination. Here, in the case of bonding the sintered bodies 1 and 1a of this example, instead of using the V-shaped bonding table 9 of Fig. 6, the sintered bodies 1 and 1a are combined and bonded by using a bonding table of proper shape. The sintered bodies 1 and 1a (at least standard sintered bodies 1) each has spacers 3 provided on side faces and the external shape defined by the top faces of the spacers is rectangular as described above, and thus, adjacent sintered bodies 1 with spacers are bonded as they are parallel, aligned in vertical and lateral directions and oriented in the same direction. By this construction, adjacent sintered bodies 1 with spacers are bonded without shift, and a bonded body having good dimension accuracy can be obtained. Accordingly, a large filter for e.g. trucks or buses can be formed by bonding a large number of sintered bodies 1 with spacers.

Further, since the sintered bodies 1 with spacers are formed to have a unified shape of square column or rectangular solid, automation of bonding step of sintered bodies by a machine can be easily achieved. Thereafter, the bonded body 11 is subjected to machining steps such as cutting, grinding or polishing into cylindrical shape as shown in the dotted line of Fig. 7.

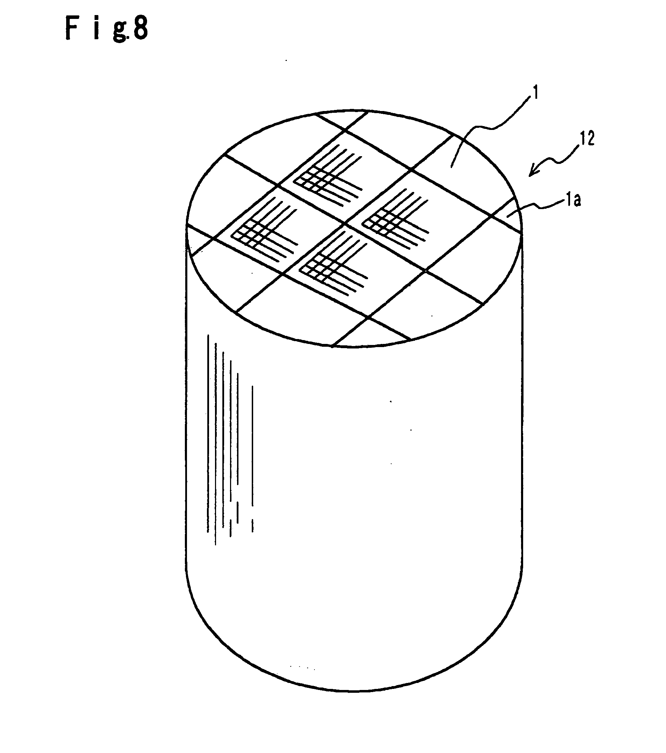

Fig. 8 shows a ceramic honeycomb filter 12 produced by such machining steps, which is a large-sized filter to be employed as a DPF for cleaning exhaust gas of e.g. vehicles.

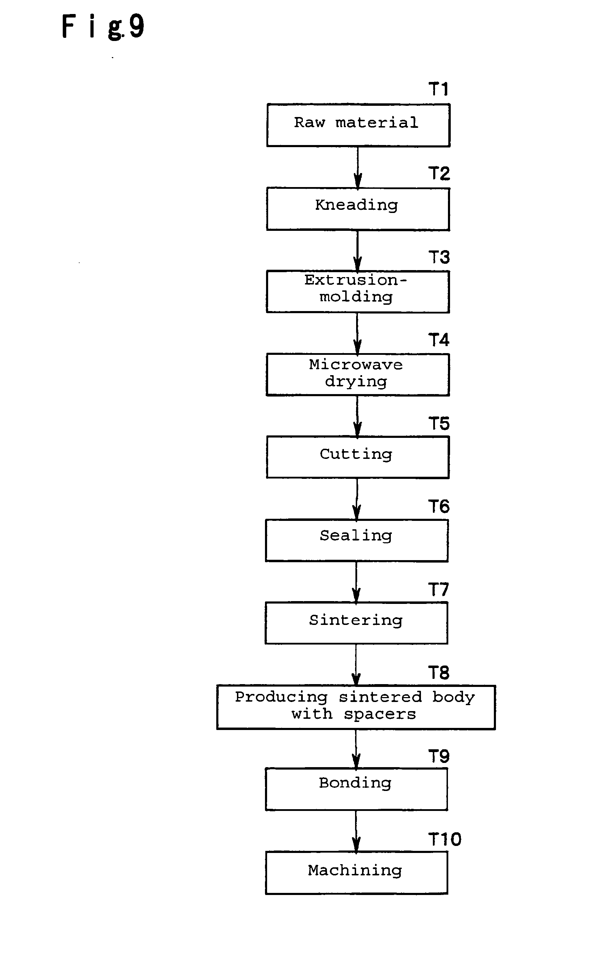

Fig. 9 is a flow chart showing the process for producing a ceramic honeycomb filter.

### Step T1

A raw material consisting of e.g. a ceramic powder such as a Si powder, a pore-forming agent and an auxiliary agent, is prepared.

### Step T2

The raw material is mixed and kneaded into a clay state.

### Step T3

The kneaded raw material is extrusion-molded. By this extrusion-molding, a molded body having through holes is produced.

### Step T4

The molded body formed by the extrusion-molding is subjected to a microwave drying. This drying may be carried out by e.g. hot air or induction heating.

### Step T5

The dried molded body is cut into a predetermined size.

### Step T6

End faces of the molded body are sealed. The sealing is to seal the through holes at the ends of the molded body into hound's tooth pattern as described in Fig. 1. Here, the step may be carried out after sintering the molded body, after producing a sintered body with spacers or after producing a bonded body (refer to Fig. 7) depending on e.g. the material of the sealing member.

### Step T7

The molded body is sintered. By this step, a sintered main body having substantially square column shape is formed. The sintered main body has non-flat warped surfaces as described above.

### Step T8

A sintered body with spacers is produced according to the process shown in Fig. 2.

### Step T9

A plurality of sintered bodies with spacers are bonded as shown in Fig. 6 or Fig. 7.

### Step T10

The bonded body is cut into a cylindrical shape, and its surface is ground to form a ceramic honeycomb filter.

### INDUSTRIAL APPLICABILITY

The present invention can be applied to a case of forming a ceramic honeycomb filter to be used for buses or trucks by bonding a plurality of sintered bodies.

The entire disclosure of Japanese Patent Application No. 2005-058939 filed on March 3, 2005 including specification, claims, drawings and summary is incorporated herein by reference in its entirety.

## Claims

1. A sintered body with spacers comprising a sintered main body of column shape having both ends opening in a honeycomb shape and having a rectangular cross-section, and spacers provided on side faces of the sintered main body, wherein the spacers are provided on at least opposing two side faces among four side faces of the sintered main body, and wherein planes defined by top faces of the spacers on the respective side faces are parallel with each other.

2. The sintered body with spacers according to Claim 1, wherein the spacers are provided on the four side faces, and an imaginary cross-section defined by top faces of the spacers is a rectangle or a square.

3. A process for producing a sintered body with spacers, comprising a step of applying pasty spacers at predetermined positions of four side faces of a sintered main body of column shape having both ends opening in a honeycomb shape and having a rectangular cross-section, a step of setting the sintered main body in a molding frame having a rectangular hollow cross-section enclosed by four planes, and a step of drying and solidifying the spacers.

4. A method for bonding the sintered bodies with spacers as defined in Claim 2, comprising a step of bonding adjacent sintered bodies in a state that their spacers are contact with each other.

5. The method for bonding the sintered bodies with spacers according to Claim 4, wherein the adjacent sintered bodies are bonded so that their center positions in their longitudinal directions of the sintered bodies are aligned.

6. A ceramic honeycomb filter which is formed by machining a bonded body comprising a plurality of sintered bodies bonded by the bonding method of sintered bodies with spacers as defined in Claim 4 or 5.

7. The ceramic honeycomb filter according to Claim 6, wherein both ends of each of the sintered bodies are opening in a honeycomb shape and the ends are each sealed into a hound's tooth pattern or a checkerboard pattern.
